**Europäisches Patentamt**

(19) **European Patent Office**

**Office européen des brevets**

(11) Publication number : **0 357 973 B1**

## (12) EUROPEAN PATENT SPECIFICATION

(45) Date of publication of patent specification :
30.09.92 Bulletin 92/40

(51) Int. Cl.⁵ : **B60J 10/00**, B60J 10/08,
B60R 13/06

(21) Application number : **89114530.2**

(22) Date of filing : **07.08.89**

(54) A sealing weatherstrip for flush windows or doors of agricultural tractor cabs.

(30) Priority : **08.09.88 IT 5338388 U**

(43) Date of publication of application :
**14.03.90 Bulletin 90/11**

(45) Publication of the grant of the patent :
**30.09.92 Bulletin 92/40**

(84) Designated Contracting States :
**AT CH DE ES FR GB LI**

(56) References cited :
**GB-A- 2 036 840**
**US-A- 4 084 348**
**US-A- 4 112 623**

(73) Proprietor : **SAME S.p.A.**
**Viale F. Cassani, 14**
**I-24047 Treviglio Bergamo (IT)**

(72) Inventor : **Salvini, Tiziano**
**Via Emilia, 14**
**I-20097 San Donato Milanese (Milano) (IT)**

(74) Representative : **Buzzi, Franco et al**
**c/o Jacobacci-Casetta & Perani S.p.A. Via**
**Alfieri, 17**
**I-10121 Torino (IT)**

EP 0 357 973 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to a sealing weatherstrip for windows or doors of agricultural tractors, of the type comprising a profiled section of elastomeric material having a front fixing part and a rear tubular sealing part, wherein the front fixing part of the sealing weatherstrip has a flat outer surface along which a double-sided adhesive strip is applied for sticking the weatherstrip to the inner marginal surface of the window or door of the tractor.

A sealing weatherstrip of the above-mentioned type is known from GB-A-2 036 840, wherein the flat outer surface is comprised of a first and a second base placed on two mutually perpendicular planes, and is therefore in the form of a generally wedge or V-shaped surface. The double-sided adhesive strip is applied to both or only one of the two bases. In either case, this prior art weatherstrip is only adapted to be fitted within a corresponding V-shaped, or angled flange of a motor vehicle body door or door opening, and not on a planar marginal edge thereof. The or each double-sided adhesive strip, even if mounted on the or respective base partially in a recess therein, is not safely protected in use against ambient agents (water, moisture and dust) negatively affecting the adhesive cohesion of the two adhesive sides of the double adhesive strip. Moreover, proper application of this known weatherstrip onto the receiving vehicle body flange is troublesome.

Sealing weatherstrip with double-sided adhesive fixing strip are also known from US-A-4084348 and US-A-4112623, with same drawbacks in connection with safe protection of the adhesive strip and correct positioning during application.

The object of the present invention is to overcome the above problems, providing a sealing weatherstrip of the type defined above which has a shape which enables it to be mounted quickly and easily, as well as ensuring extremely effective sealing in its applied condition.

According to the invention, this object it achieved by virtue of the features set forth in the characterising part of Claim 1.

It is advantageous for the rear tubular sealing part of the weatherstrip to have an outer rib which projects laterally on the same side as the lateral tubular sealing appendage of the front fixing part of the weatherstrip.

The invention will now be described in detail with reference to the appended drawings, provided purely by way of non-limiting example, in which:

Figure 1 is a perspective view of a length of a sealing weatherstrip for tractors, according to the invention, and

Figure 2 is a cross-section of the weatherstrip in its position of use.

With reference to the drawings, a sealing weatherstrip for flush windows or doors of agricultural tractor cabs is generally indicated 1. The weatherstrip 1 is constituted by a profiled section having a front fixing part 2 of relatively stiff elastomeric material and a tubular rear sealing part 3 of soft elastomeric material. The front fixing part 2 and the rear tubular part 3 are normally produced in a single piece by coextrusion.

The outer face of the front fixing part 2, that is, the face which faces away from the rear tubular part 3, has a flat surface 4 delimited along one edge by a less-projecting frontal sealing flange 5 and along its opposite edge by a more-projecting lateral tubular sealing appendage 6. Above this lateral tubular appendage 6, the rear tubular sealing part 3 has an outer, laterally-projecting, longitudinal rib 7.

Further ribs or ridges 8 are formed on the outer surface of the tubular part 3 facing away from the front fixing part 2.

A double-sided adhesive strip, indicated 9, is stuck by its inner adhesive face to the flat outer surface 4 of the front fixing part 2 and a peelable covering 10 is applied to its outer face.

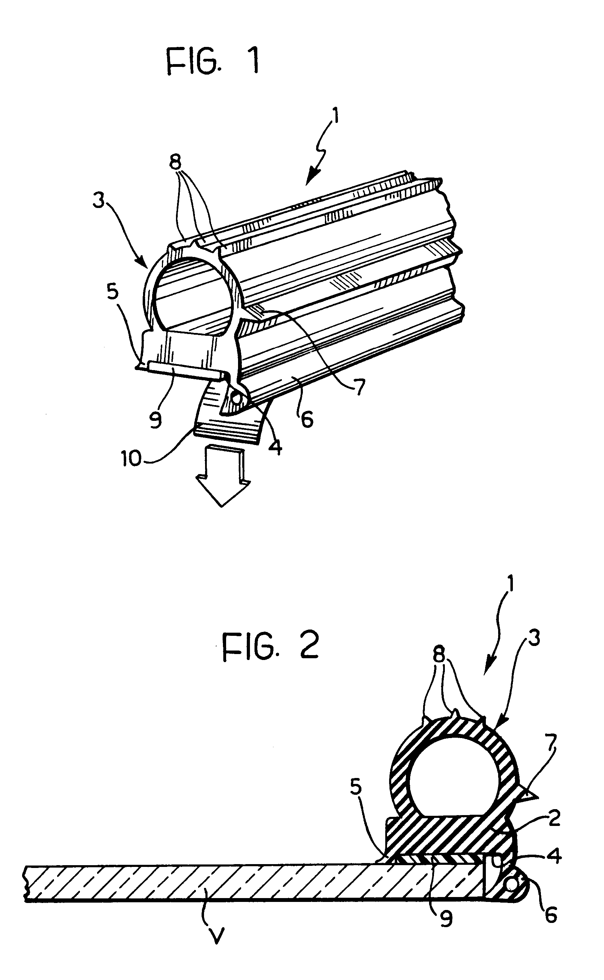

In order to apply the weatherstrip 1 to a window or door of a tractor cab, it suffices to remove the peelable covering 10 and stick the outer face of the double-sided adhesive strip 9 along the marginal surface of the inner face of the window or door in the manner illustrated in Figure 2. As can be seen from this Figure, which relates to the application of the weatherstrip 1 to a flush window V, when the weatherstrip 1 is applied, the flange 5 bears against the inner face of the window V along the inner side of the flat surface 4 of the fixing part 2, while the lateral tubular sealing appendage 6 extends freely alongside the peripheral edge of the window V, thus protecting its corner and at the same time enabling close flush coupling with any adjacent window.

## Claims

1. A sealing weatherstrip (1) for windows or doors (V) of agricultural tractor cabs, comprising a profiled section of elastomeric material having a front fixing part (2) and a rear tubular sealing part (3), wherein the front fixing part (2) has a flat outer surface (4) along which a double-sided adhesive strip (9) is applied for sticking the weatherstrip (1) to the inner marginal surface of the window or door (V), characterised in that the flat surface (4) of the front fixing part (2) is planar and in that the inner edge thereof is delimited by a lateral flange (5) for frontal sealing against the inner marginal surface of a flush window or door (V), and the outer edge thereof is delimited by a tubular lateral appendage (6), protruding opposite to the said rear tubular part (3), for lateral sealing of the peripheral edge of the flush window or door (V).

**2.** A weatherstrip according to Claim 1, characterised in that the rear tubular sealing part (3) has an outer longitudinal rib (7) projecting laterally on the same side as the tubular lateral sealing appendage (6) of the front fixing part (2).

**Patentansprüche**

**1.** Dichtungsstreifen (1) für Fenster oder Türen (V) für Kabinen von landwirtschaftlichen Traktoren, wobei der Dichtungsstreifen einen profilierten Bereich aus einem elastomeren Material enthält, der einen vorderen Befestigungsteil (2) sowie einen hinteren, rohrartigen Dichtungsteil (3) besitzt, wobei der vordere Befestigungsteil (2) eine ebene Außenfläche (4) besitzt, längs der ein beidseitig klebendes Band (9) angebracht wird, um den Dichtungsstreifen (1) an die innere Randfläche des Fensters oder der Tür (V) zu kleben, dadurch gekennzeichnet, daß die ebene Fläche (4) des vorderen Befestigungsteils (2) eben ist, und daß die Innenkante davon von einem seitlichen Flansch (5) begrenzt wird, um nach vorne gegen die innere Randfläche eines fluchtenden Fensters oder einer Tür (V) abzudichten, und die Außenkante davon von einem rohrartigen, seitlichen Fortsatz (6) begrenzt wird, der entgegengesetzt zum hinteren, rohrartigen Teil (3) hervorragt, um den Rand des fluchtenden Fensters oder der Tür (V) seitlich abzudichten.

**2.** Dichtungsstreifen gemäß Anspruch 1, dadurch gekennzeichnet, daß der hintere, rohrartige Dichtungsteil (3) eine äußere Längsrippe (7) besitzt, die auf der selben Seite wie der rohrartige, seitliche Dichtungsfortsatz (6) des vorderen Befestigungsteils (2) seitlich vorspringt.

**Revendications**

**1.** Joint d'étanchéité (1) pour fenêtres ou portes (V) de cabines de tracteurs agricoles, du type qui comprend un profilé en matière élastomère ayant une partie de fixation avant (2) et une partie d'étanchéité tubulaire arrière (3), dans lequel la partie de fixation avant (2) du joint d'étanchéité présente une surface extérieure plate (4) le long de laquelle une bande adhésive à double face (9) est appliquée pour coller le joint d'étanchéité (1) à la surface marginale intérieure de la fenêtre ou porte (V), caractérisé en ce que la surface plate (4) de la partie de fixation avant (2) est plane et en ce que le bord intérieur de cette surface est délimité par un rebord latéral (5) destiné à établir un joint étanche avant contre la surface marginale intérieure d'une fenêtre ou porte affleurante (V), et son bord extérieur est délimité par une aile latérale tubulaire (6), qui fait saillie en sens inverse de ladite partie tubulaire arrière (3) pour former un joint d'étanchéité latéral du bord périphérique de la fenêtre ou porte affleurante (V).

**2.** Joint d'étanchéité selon la revendication 1, caractérisé en ce que la partie d'étanchéité tubulaire arrière (3) possède une nervure longitudinale extérieure (7) qui fait saillie latéralement sur le même côté que l'aile d'étanchéité latérale tubulaire (6) de la partie de fixation avant (2).

EP 0 357 973 B1

# FIG. 1

# FIG. 2